(19) **Europäisches Patentamt**
**European Patent Office**
**Office européen des brevets**

(11) **EP 3 062 635 B1**

(12) **EUROPEAN PATENT SPECIFICATION**

(45) Date of publication and mention
of the grant of the patent:
**04.12.2019 Bulletin 2019/49**

(51) Int Cl.:
*A23L 29/20* (2016.01)        *A23L 29/212* (2016.01)
*A23L 29/275* (2016.01)       *A23L 23/10* (2016.01)

(21) Application number: **14780825.7**

(22) Date of filing: **01.10.2014**

(86) International application number:
**PCT/EP2014/071003**

(87) International publication number:
**WO 2015/055431 (23.04.2015 Gazette 2015/16)**

(54) **BINDER COMPOSITION COMPRISING GAS**

BINDEMITTELZUSAMMENSETZUNG MIT GAS

COMPOSITION DE LIANT COMPRENANT DU GAZ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.10.2013 EP 13189376**

(43) Date of publication of application:
**07.09.2016 Bulletin 2016/36**

(73) Proprietors:
  • **Unilever N.V.**
    **3013 AL Rotterdam (NL)**
    Designated Contracting States:
    **AL AT BE BG CH CZ DE DK EE ES FI FR GR HR
    HU IS IT LI LT LU LV MC MK NL NO PL PT RO RS
    SE SI SK SM TR**
  • **Unilever PLC**
    **London, Greater London EC4Y 0DY (GB)**
    Designated Contracting States:
    **CY GB IE MT**

(72) Inventors:
  • **EWALD, Ron Kai Jürgen**
    **74074 Heilbronn (DE)**
  • **LAMRANI ÉP VERMEIDEN, Mariama**
    **74172 Neckarsulm (DE)**
  • **MELLEMA, Michel**
    **NL-3133 AT Vlaardingen (NL)**
  • **RUPP, Winfried**
    **74074 Heilbronn (DE)**

(74) Representative: **van Benthum, Wilhelmus A. J.
Unilever Patent Group
Olivier van Noortlaan 120
3133 AT Vlaardingen (NL)**

(56) References cited:
    **JP-A- 2001 292 744    JP-A- 2004 275 089**

## Description

The present invention relates to a food composition comprising fat and starch and a process to make the same. It further relates to the use of said composition to increase viscosity of a liquid or to provide a viscous soup or sauce.

## Background of the invention

In the preparation of viscous soups or sauces, binding is often provided for by a roux. A roux comprises a mixture of fat and flour in about equal amounts, which is heated during the preparation of the roux. Upon addition of liquid to the roux and dissolution, the viscosity of the added liquid increases. Without willing to be bound to theory, it is believed that the binding results from the swelling of the starch which is present in the flour. In this specification, the term 'roux' refers to a binder containing fat and starch. The starch can be added in the form of flour, but can also be added as starch.

A roux, as prepared traditionally in the kitchen, is in a pasty form and contains butter and flour. Also industrially prepared pasty roux is known. A disadvantage of such a pasty roux is that during dissolution of the roux in a liquid, undesired lump formation occurs easily. Pasty roux, by nature containing a relatively high level of fat, often shows exudation of the fat from the roux during storage, which is not desired.

Industrially prepared binders which contain fat and starch, like a roux, are available in granular form. A disadvantage of granular roux is that it is perceived artificial. Especially in restaurant kitchens a binder with an appearance similar to traditionally prepared roux, i.e. a pasty roux, is desired. Not all fats are suitable to be incorporated in a granular roux. In particular if butter fat is desired in the roux, such as present in traditional roux, granulation is complicated, if possible at all.

JP2001/292,744A describes an air containing solid curry roux, comprising a.o. wheat flour, fat, crystalline ingredients and spices such as curry powder.

JP2004 275089 describes a roux comprising acid and carbonate as effervescent agent, which foames upon contact with water during use of the roux.

There is a need for a roux which has an appearance similar to traditionally prepared roux, wherein such a roux provides optimal binding of liquid food products. It is desired to have as little lump formation as possible during dissolution of the roux in an aqueous liquid and no burning of the roux at the bottom of the cooking pot. In addition, such a roux is desired wherein the viscosity of the roux is not too thin, as this compromises proper dosing of the product during use. The fat exudation from such a roux is preferably as little as possible. The product is preferably flexible in the use of fats, preferably a roux is desired which comprises butter fat.

## Summary of the invention

Surprisingly, these aims were met by a food product comprising:

- from 30 to 85 wt% starch,
- from 15 to 50 wt% of fat,

wherein the total amount of salt, monosodium glutamate and sugar taken together is less than 15 wt%,
wherein the product is in the form of a paste and
wherein the product has a density of between 0.6 and 1.0 kg/l at 20 °C and
wherein the product comprises from 10 to 40% of gas, compared to an identical product without added gas, wherein the percentage of gas is calculated according to the formula, wherein an aerated (gas-containing) product and non-aerated product are compared in a respective cup of a certain fixed volume:

$$\text{percentage of gas} = 100 - [(m3-m1)/\{(m2-m1)/100\}],$$

wherein:

$m_1$ = weight of the cup (a),
$m_2$ = weight of the cup including the non-aerated product (g),
$m_3$ = weight of the cup including the aerated product (q)

The invention further relates to a method for preparing a food product according to the invention, the method comprising the steps of:

a) Providing a mixture comprising:

- fat and
- starch,

b) Adding gas to the mixture,
c) Packaging the mixture resulting from step b),

to result in a food product according to the invention.

The invention further relates to the use of the food product of the present invention to increase the viscosity of an aqueous liquid or to prepare a viscous soup or sauce.

**Detailed description of the invention**

The food product of the present invention comprises a mixture of fat and starch and is normally used to thicken an aqueous liquid. The food product therefore is preferably a roux.

Percentages by weight (wt%) are based on the weight of the food product, unless indicated differently.

Starch

The present invention comprises starch. Starch is believed to be responsible for the binding effect in the preparation of e.g. a soup or a sauce, when using a product of the invention. Starch is present in a total amount of from 30 wt% to 85 wt%, preferably from 35 wt% to 85 wt%, more preferably in an amount of from 35 wt% to 60 wt%, more preferably of from 40 wt% to 55 wt%, even more preferably of from 40wt% to 50 wt% even more preferably of from 45 wt% to 50 wt%, based on the weight of the product. "Total amount" refers to all the starch present in the food product.

A preferred product of the invention comprises:

- from 35 to 85 wt% of starch,
- from 15 to 50 wt% of fat,

wherein the total amount of salt, monosodium glutamate and sugar taken together is less than 15 wt%,
wherein the product is in the form of a paste and
wherein the product comprises from 10 to 40% of gas and has a density of between 0.6 and 1.0 kg/l at 20 °C.

Starch preferably comprises starch from plant of the family of gramineae, or from tuber plants or from legumes or mixtures thereof. Preferably starch comprises one of wheat starch, rye starch, corns starch, rice starch, potato starch, tapioca starch or mixtures thereof. Preferably the starch comprises wheat starch. Preferably starch comprises wheat starch in an amount of from 30 to 100 wt%, more preferably of from 50 to 90 wt%, even more preferably of from 60 to 80 wt%, based on the weight of the total starch content.

The product of the invention preferably comprises flour. Flour is preferably present in an amount of from 50 to 85 wt%, more preferably of from 60 to 80 wt%, even more preferably of from 70 to 80 wt%, based on the weight of the product. As known to the person skilled in the art, flour contains starch and in case flour is present, flour is a source of starch. For example the composition can comprise from 35 to 85% starch and from 50 to 85% of flour. In this case (at least part of, preferably all of) the starch is encompassed in the flour.

A product can be preferred, for example, comprising:

- starch, wherein the product comprises from 50 to 85 wt% of wheat flour, based on the weight of the product
- from 15 to 50 wt% of fat, wherein the fat comprises from 8 to 60 wt% of solid fat at 25 °C, based on the weight of the total amount of fat,

wherein the total amount of salt, monosodium glutamate and sugar taken together is less than 15 wt%,
wherein the product is in the form of a paste and
wherein the product comprises from 10 to 40% of gas and has a density of between 0.6 and 1.0 kg/l at 20 °C.

Flour comprises preferably flour from gramineae or tuber plants or from legumes or mixtures thereof. Preferably flour comprises wheat flour, rye flour, corn flour, potato flour or mixtures thereof. Preferably the flour comprises wheat flour in an amount of from 30 to 100 wt%, more preferably of from 50 to 100 wt%, even more preferably of from 60 to 95 wt%, based on the total weight of the flour. Most preferably the product of the invention comprises wheat flour, wherein wheat flour is preferably present in an amount of from 50 to 85 wt%, more preferably of from 60 to 80 wt%, even more preferably of from 70 to 80 wt%, based on the weight of the product.

The product of the invention might contain gluten protein in an amount of from 5 to 14 wt%, preferably of from 4 to 12 wt%, preferably in an amount of from 6 to 10 wt%, based on the weight of the food product.

Fat

The food product of the present invention comprises fat. Fat in the present context are triglycerides, and include oils and fats that are solid or liquid at 25 °C. The terms oil and fat are used interchangeably. Fat is present in the product of the invention in an amount of from 15 to 50 wt%, based on weight of the food composition. Preferably fat is present in a total amount of from 20 to 40 wt%, most preferably of from 25 to 35 wt%. A relatively high fat content is known to reduce the risk of lump formation when using a traditional roux. It was observed that the present invention allowed a reduction of the fat level (*i.e.* a level which is lower than 50%), compared to traditional roux, without increasing the formation of lumps.

The fat preferably comprises from 8 to 60 wt%, preferably of from 8 to 50 wt%, even more preferably of from 9 to 40 wt%, even more preferably of from 9 to 30 wt%, most preferably from 10-25 wt% solid fat at 25 °C, based on the weight of the total amount of fat in the product of the invention. Solid fat means the solid material present in the fat.

The product of the invention comprises preferably from 2 to 25 wt%, more preferably of from 2 to 20 wt%, even more preferably of from 2.5 to 15 wt% and most preferably of from 2 to 10 wt% of solid fat.

Preferably fat comprises a fat selected from the group consisting of butter fat, vegetable fat, fractions of butter fat, fractions of vegetable fat, derivatives of butter fat, derivatives of vegetable fat, chicken fat, beef fat and mixtures thereof. Preferably fat comprises a fat selected from the group consisting of butter fat, vegetable fat, fractions of butter fat, fractions of vegetable fat, derivatives of butter fat, derivatives of vegetable fat, and mixtures thereof. More preferably the fat comprises a fat selected from the group consisting of sun flour oil, palm oil, butter fat, palm kernel oil, corn oil, cottonseed cake oil, soy bean oil, coconut oil, rape seed oil, their fractions, their derivatives, and mixtures thereof.

The melting point of the fat is preferably of between 20 and 70, more preferably of between 22 and 40°C, most preferably of between 25 and 40 °C. The melting point is considered the lowest temperature at which the solids level according to ISO 8292 1D is below 0.5%.

More preferably, fat comprises butter fat. Preferably, the fat comprises butter fat in an amount of more than 50 wt%, preferably of from 50 to 100 wt%, more preferably of from 80 to 100 wt%, based on the weight of the total amount of fat in the food product. It is most preferred that the fat is butter fat. Butter fat is the fatty portion of milk. It was observed that the present invention was in particular useful in the situation wherein the product comprises butter fat. A roux comprising butter fat is hard to prepare in the form of granules, if at all, so the need for a roux comprising butter, which dissolves well, has no or at least a strongly reduced risk of burning and does not, or at least hardly, result in lumps is crucial and does not exist, as far as the applicants are aware.

Gas

The product of the present invention comprises from 10 to 40% of gas. Gas contributes to the spoonability of the product. In addition the presence of gas improves the dissolution and reduces formation of lumps and the risk of burning of the binding product, e.g. roux, during use, compared to a binding product without gas. Gas is preferably present in an amount of from 22 to 38 %, compared to the identical product without added gas. This percentage is calculated by the following formula, wherein an aerated (gas-containing) product and non-aerated product are compared in a respective cup of a certain fixed volume:

$$\text{Percentage of gas} = 100 - [(m_3 - m_1)/\{(m_2 - m_1)/100\}].$$

$m_1$ = weight of the cup (g)
$m_2$ = weight of the cup including non-aerated product (g)
$m_3$ = weight of the cup including aerated product (g)

A calculation example has been included in Example 4.

The gas is preferably present in an overrun of the product of from 10 to 70 %, preferably of from 30 to 60 %. This percentage is calculated by the following formula, wherein an aerated (gas-containing) product and a non-aerated product are compared in a respective cup of a fixed volume and $m_1$, m2, and m3 have the meaning as indicated above:

$$\text{Percentage of overrun} = [(m_2 - m_3) / (m_3 - m_1)] \times 100$$

The gas preferably comprises nitrogen, preferably in an amount of from 70 to 100 wt%, more preferably 75 to 100 wt%. It can preferably contain 90 to 99 wt% or 95 to 98 wt% nitrogen, based on the total gas content of the product. The gas preferably is air. More preferably the gas is nitrogen.

As a consequence of the gas inclusion, the product of the present invention has a relatively low density. The density of the product is between 0.6 and 1.0 kg/l at 20 °C, preferably the density is between 0.7 and 0.9, most preferably of between 0.75 and 0.85 kg/l at 20 °C.

Crystalline material

It was found in the present invention that to provide a product, e.g. a roux, with pasty texture, similar to traditional home made roux, which is not too runny, and to provide a good level of binding as provided by the required starch levels, while at the same reducing the level of lumps the level of crystalline material should be relatively low or even absent. This was a counterintuitive observation, because crystalline ingredients such as salt and sugar are recommended in literature to add to starch, to prevent lumping upon dissolution. Without willing to be bound to theory, crystalline ingredients are known to the skilled person to break open a food composition like a roux material, thereby allowing water to enter it and enhance its dissolution in an aqueous solution, like e.g. water. Reducing the crystalline ingredients surprisingly resulted in less formation of lumps during dissolution in hot water. Low levels of crystalline ingredients furthermore resulted surprisingly in a roux product with a high viscosity, when compared to the situation wherein crystalline ingredients were present in a relatively high amount. Surprisingly, also the level of oil exudation was reduced by reducing the level of crystalline ingredients.

Crystalline ingredients preferably comprise at least one of salt, such as sodium chloride, monosodium glutamate (MSG) and sugar. Accordingly, the total amount of salt, monosodium glutamate and sugar taken together is less than 15 wt%. Preferably the total amount of salt, monosodium glutamate and sugar taken together is less than 13 wt%, even more preferably less than 10 wt%, even more preferably less than 5 wt%, or even more preferably less than 1 wt%. Salt, monosodium glutamate and sugar taken together can for example be present in an amount of form 0 to 15 wt%, from 0.1 to 10 wt% or from 0.5 to 5 wt%. It can be preferred that salt, MSG and sugar are each present in an amount of less than 15 wt%, preferably less than 10 wt% even more preferably less than 5 wt%, even more preferably less than 1 wt%, most preferably are absent, provided that the total level of salt, monosodium glutamate and sugar taken together is less than 15 wt%. It is preferred that the total amount of crystalline ingredients, more preferably water-soluble crystalline ingredients, is less than 15 wt%, preferably less than 10 wt% even more preferably less than 5 wt%, or even more preferably less than 1 wt%. In the context of the present invention, "solid fat" is not part of the "crystalline material".

Other ingredients

It is not preferred that water is present as the continuous phase. Preferably fat is the continuous phase. It is preferred that the amount of water is lower than 10 wt%, more preferably lower than 5 wt%, even more preferably lower than 2 wt%. Most preferably no water is added as an ingredient during production of the product.

The level of flavours, for example spices, is preferably less than 3 wt%, even more preferably less than 1 wt%, most preferably the product is free from flavours, e.g. free from spices. Flavours, e.g. spices can be present in an amount of from 0 to 3 wt%, preferably of from 0.1 to 1 wt%.

It is preferred that the product of the invention resembles a natural product as much as possible. Artificial ingredients are not desired. In this respect, it is not desired that an effervescent agent is present. For example, preferably the level of effervescent agent, e.g. the level of carbonate-based effervescent, such as sodium hydrogen carbonate, is below 1%, preferably, effervescent agent, e.g. carbonate based effervescent, such as sodium hydrogen carbonate is not present in the food product. Moreover, such an effervescent agent may create undesired, artificial, effects when the product is applied during cooking.

Preferably, the product of the invention relates to a roux product comprising:

- from 50 to 85 wt% of starch, wherein starch comprises wheat starch, preferably wherein the product comprises from 50 to 85 wt% of wheat flour, based on the weight of the product
- from 15 to 50 wt% of fat, wherein the fat comprises from 8 to 60 wt% of solid fat at 25 °C, based on the weight of the total amount of fat,

wherein the total amount of salt, monosodium glutamate and sugar taken together is less than 10 wt%, wherein the product is in the form of a paste and wherein the product comprises from 10 to 40% of gas and has a density of between 0.6 and 1.0 kg/l, preferably of between 0.7 and 0.85 kg/l, at 20 °C.

The food product is in the form of a paste. A paste is known to the person skilled in the art. It is preferably a semi-solid aggregation of material. The product preferably has a viscous modulus (G") of at least 10 Pa, preferably of at least 20 Pa, more preferably at least 40 Pa.

These values can be measured by a person skilled in the art of rheometry using the following circumstances:

- a maturation time of at least 12 h under ambient conditions
- measurement temperature of 25 °C,
- an oscillatory frequency of 1 rad/s,
- measurement is done in the linear range.

This set of parameters refers to a standard oscillatory test conducted with a standard state of the art low deformation rheometer as commercially available from Bohlin™ or TA Instruments™.

The texture of the product of the invention can be expressed as the force required to penetrate the product for a predetermined distance. This technique is common in the art, and typically performed by a penetrometer, such as available from Stable Micro Systems ™, using the instructions of the manufacturer.The force to penetrate a cylinder of 6 mm diameter over a distance of 5 mm into the product at a temperature of 23 °C using a penetrometer (cylindrical geometry) is preferably lower than 2.5 kg. The force is preferably higher than 0.01, preferably higher than 0.03 more preferably higher than 0.035, even more preferably higher than 0.04 kg, more more preferably of higher than 0.05 or preferably higher than 0.06 kg. The force is preferably of between 1.5 and 0.01 kg, preferably of from 0.8 to 0.05 kg, preferably of from 0.3 to 0.035 kg, preferably of between 0.3 and 0.06 kg, preferably of between 0.2 and 0.04 kg, most preferably of between 0.1 and 0.06 kg. This texture is preferred, to provide an optimal inclusion of the gas in the product.

The product of the invention is preferably a roux. The product is in the form of a paste.

Process

Amounts, preferred amounts, ingredients and preferred ingredients etcetera as specified for the product apply also for the process, *mutatis mutandis.*

The invention further relates to a method for preparing of a product according to the invention, the method comprising the steps of:

a) Providing a mixture comprising:

- fat and
- starch,

b) Adding gas to the mixture,
c) Packaging the mixture resulting from step b),

to result in a product according to the invention.

Step a), mixing

In step a) of the method of the invention, fat is mixed with starch.

The amount of fat present in the mixture in step a) is preferably of from 15 to 50 wt%, preferably of from 20 to 40 wt%, most preferably of from 25 to 35 wt%, based on the weight of the resulting food product.

Fat is preferably in liquid form when combined with the starch. To this end, preferably the process comprises a step of heating the fat until melted, before mixing it with the starch. In the present invention, the fat preferably comprises butter fat, preferably the fat is butter fat. Butter fat is the fatty fraction of butter.

Starch, is preferably added in an amount of from 35 wt% to 85 wt%, preferably in an amount of from 35 wt% to 60 wt%, preferably of from 40 wt% to 55 wt%, more preferably of from 40 wt% to 50 wt% even more preferably of from 45 wt% to 50 wt%, based on the weight of the resulting product. The starch can be added in the form of starch powder, preferably as wheat starch, rye starch, corn starch, rice starch, potato starch, tapioca starch or a mixture thereof. Preferably the starch is added as wheat starch.

It is preferred that starch is added, preferably that at least part of the starch is added, in the form of flour, preferably in the form of wheat flour. Flour is added during step a), preferably in an amount of from 50 to 85 wt%, preferably of from 60 to 80 wt%, even more preferably of from 70 to 80 wt%.

It is preferred that when flour is added, the amount of starch added in the form of starch powder added to the mixture of step a) is low, preferably is in an amount of less than 10 wt%, more preferably in an amount of less than 5 wt%, even more preferably in an amount of less than 1%, based on the weight of the resulting product, preferably is absent. In this way the starch is predominantly provided by flour.

Flour comprises preferably one of the group consisting of wheat flour, rye flour, corn flour, potato flour or mixtures thereof. More preferably, the flour comprises wheat flour, most preferably, the flour is added in the form of wheat flour.

It can be preferred that the product comprises additional ingredients, like flavour. Preferably additional ingredients, e.g. flavours or spices are added to the mixture during the mixing step a).

Mixing can be carried out as known in the art, for example in a mixer from Stephan™. Mixing is normally carried out until a homogenous mixture is obtained. Preferably mixing is carried out at a temperature above the melting temperature of the fat.

Heating step

Preferably, after mixing step a), the process comprises the step of heating the mixture resulting from step a). Heating is preferably carried out to a temperature of above the melting temperature of the fat. Heating is preferably carried out to a temperature of the mixture of between 100°C and 150 °C, preferably of from 110°C to 130°C, preferably the heating period at these temperatures is carried out until a water content is reached of the product of below 5.4 wt%. As known to the person skilled in the art, the time required depends on the batch size, but can for example be for a time of between 10 and 40 minutes, preferably of between 15 and 30 minutes, most preferably of between 15 and 20 minutes. Heating to a temperature of between 100°C and 150 °C, preferably of from 110°C to 130°C is preferably present in case flour is added to the mixture of step a). In this case, the gluten proteins in the flour are inactivated by the heating.

Cooling step

In a next step, when the heating step has been carried out, the mixture resulting from the heating step is cooled. Cooling includes the meaning that the mixture is allowed to cool down. The mixture is cooled until a solid fat content is reached of from 8 to 40%, preferably of from 10 to 20%, even more preferably of from 10 to 15%, based on the weight of the total amount of fat. The level of fat crystallisation can be measured as known in the art, for example using NMR technology. As will be clear for the person skilled in the art, the temperature to which the mixture should be cooled will depend on the type of fat that is present in the mixture. Too much solid fat, e.g. more than 50 wt%, based on the weight of the total amount of fat in the resulting product at 25 °C, or for example more than 40 wt% at the moment of inclusion of gas, is believed to result in suboptimal inclusion of gas (e.g. aeration). If the level of solid fat is too low, e.g. lower than 8 wt% based on the weight of the total amount of fat in the resulting food product, the resulting product is expected to be too runny, and therefore is expected that it cannot keep the gas inside the product, e.g. because the texture collapses.

Accordingly, the invention preferably relates to a method for preparing of a product according to the invention, the method comprising the steps of:

    a) Providing a mixture comprising fat and starch,

        ♠ Fat and
        ♠ Starch,

    * Heating the mixture resulting from step a),
    * Cooling the mixture resulting from the heating step until a level of solid fat is reached of between 8 and 40 wt%, based on the weight of the total amount of fat.

    b) Adding gas to the mixture resulting from the cooling step,
    c) Packaging the mixture to which gas is added,

to result in a food product of the invention.

Step b, inclusion of gas

The gas can be added simultaneously or after step a). It can be preferred for example that ingredients are used comprising gas, but it is preferred that gas is added by aeration/foaming, e.g. by whipping the mixture resulting from step a). Adding gas appeared most successful and is preferably done at a specific level of solid fat in the mixture.

In step b), gas is included into the mixture, preferably gas is added to the mixture resulting from the cooling step. Gas is preferably air or nitrogen. Gas preferably is included till a density is reached of the mixture of from 0.6 to

1.0 kg/l, preferably of from 0.7 to 0.9, most preferably of from 0.75 to 0.85 kg/l. Gas inclusion is for example carried out until an overrun is reached of from 10 to 70 %, preferably of from 20 to 65 %, most preferably of from 30 to 60 %. Gas inclusion is carried out preferably until a gas content is reached in the resulting product of between 10 and 40 %, preferably of from 38 to 22 %, compared to the product to which no gas is added, and calculated as indicated above. It is preferred if the gas comprises nitrogen. Gas can be air. It is preferred if the gas is nitrogen gas ($N_2$).

Step c), packaging

In step c) the mixture to which gas is added is packaged. The product is preferably packaged in a tub or a tube or a container. Preferably the product is packaged in a container.
Hence, preferably, the present invention relates to a process to provide a product of the invention, the process comprising the steps of:

a) Providing a mixture comprising:

- Fat, preferably comprising butter fat, and
- Starch, wherein the starch preferably comprises wheat starch, and the starch is provided by wheat flour,

\* Heating the mixture resulting from step a), preferably to a temperature of between 100 and 150 °C,
\* Cooling the mixture resulting from the heating step, until a level of solid fat is reached of between 10 and 40 %, based on the weight of the total amount of fat,

b) Adding gas to the mixture resulting from the cooling step, wherein the gas is nitrogen,
c) Packaging the mixture resulting from step b),

to result in a food product of the invention.
The invention further relates to a product which is obtainable by, preferably, which is obtained by the process of the present invention.

Use

In a further aspect, the present invention relates to the use of a product according to the invention to increase the viscosity of an aqueous liquid or to provide a viscous soup or sauce. This preferably involves the step of adding the product of the invention to an aqueous liquid or adding an aqueous liquid to the product of the invention, followed by mixing them. Aqueous liquid is preferably water or bouillon or milk. Preferably mixing is carried out while the mixture is heated, preferably to a temperature of between 50 and 100 °C, preferably of between 60 and 95 °C. Mixing and/or heating is carried out until the desired viscosity is reached. Preferably the product of the invention is mixed with the aqueous liquid in a weight/weight ratio (product: aqueous liquid) of from 1:8 to 1:15, preferably in a ratio of from 1:10 to 1:13. It might be envisioned by the skilled person that the problems relating to lump formation are more serious at low dissolution ratios. The present invention provides for a robust product which even at low dilution ratios results in minimal formation of lumps.
When using the product of the invention and using water as aqueous liquid in the preferred ratios the viscosity of the resulting viscous liquid is preferably of between 100 and 800 mPa.s, more preferably of between 200 and 700 Pa.s at 70°C. Preferably, 100 grams of product of the present invention, when mixed with 1 litre of water, and heated to a temperature of 70°C results in a viscosity of between 200 and 600 mPa.s, preferably of from 300 and 500 mPa.s. These values are measured as known to a person skilled in the art of rheology. The measurement is carried out at 70 °C, and a shear rate of 30 1/s.
When a viscous soup or sauce is prepared, the skilled person knows that additional ingredients can be added to the viscous product resulting from the dilution of the product of the present invention in an aqueous liquid.
The invention will now be exemplified by the following not-limiting examples:

## Examples

Example 1

Compositions

In this example the relevance of a relatively low level of crystalline ingredients is shown.

| Recipe | Comp. Ex.A (wt%) | Ex B (wt%) | Ex. C (wt%) | Ex. D (wt%) |
|---|---|---|---|---|
| Butter oil | 30 | 30,0 | 30,0 | 30,0 |
| Wheat Flour | 26 | 52,0 | 52,0 | 52,0 |
| Curry powder | 10 | 4,1 | 6,0 | 7,8 |
| salt | 10 | 4,1 | 2,0 | 0,0 |
| sugar | 7 | 2,9 | 1,4 | 0,0 |
| sodium glutamate | 4 | 1,6 | 0,8 | 0,0 |
| vegetable extract | 8 | 3,3 | 4,8 | 6,3 |
| Dried meat extract | 5 | 2,0 | 3,0 | 3,9 |
|  | 100% | 100% | 100% | 100% |
| Total crystals | 21% | 8.6% | 4.2% | 0% |

Comparative example 1a is an aerated roux product from the prior art. The product shows a relatively low level of starch (26% wheat flour). This is considered insufficient for proper binding. In example B the level of flour is increased to 52 wt%. In Example C the total level of crystalline ingredients (salt, MSG, sugar) is reduced, and in example D no crystalline ingredients are present at all.

The compositions where prepared in the following manner:

1. Butter fat was heated up to 80 °C.
2. Wheat flour was combined with the butter oil.
3. The temperature of the butter oil and wheat flour mix was increased to T=120 °C, while stirring occasionally for 10 min (sweating process).
4. Further dry ingredients (e.g. curry powder, salt, sugar etc.) were added to the sweated wheat flour and butter oil mix while stirring.
5. The mass was cooled down to T=25 °C in a cold water bath, which resulted in a solid fat content of 18 wt% based on fat content.
6. The mix was aerated with air at 25 °C to reach a density < 1 kg/L, using a mixer of Hobart™.
7. The finished product was filled in a cylindrical plastic container with a diameter of about 10 cm.

Fat exudation

Comparative example A showed a product wherein the surface was shiny, reflecting considerable exudation of oil from the product. In Examples B-D there was no shiny surface, no exudation of fat was observed.

Texture

The texture was measured using a penetrometer (texture analyser) TA/TX PLUS (producer: Stable Micro Systems) with a cylinder geometry of 6 mm. The pastes were measured in the original cylindrical plastic container, without sample preparation to avoid external effects. The measured dimension of the texture analysis is the force which is needed to penetrate the probe during the penetration depth of 5 mm. The force correlates with the firmness of the paste. A relatively high force indicates that the paste is relatively firm and a relatively low force indicates a relatively soft paste. Each set up was measured 6 times. The temperature during measurement was 23 °C.

| Sample | Comp. Ex.A (wt%) | Ex B (wt%) | Ex. D (wt%) |
|---|---|---|---|
| Force average [kg] | 0.029 | 0.045 | 0.081 |
| S.D. [-] | 0.001 | 0.002 | 0.006 |
| Coef. of Variation [-] | 3.6 | 4.4 | 7.6 |

This experiment indicates that increasing the level starch and reducing the level of crystals results in a harder texture (Comparative A and example B. Maintaining the starch level high and further decreasing the level of crystalline ingredients (Example B and D) surprisingly resulted in an even firmer texture.

Lump formation

The compositions A-D were added to boiling water, in the amount indicated below. Mixing was carried out for 2 minutes with a whisk in an alternating pattern of 15 seconds stirring and not stirring.

| Name | Dosage | Lumps (without curry) [g], 800 $\mu$m | Density [kg/L] |
|---|---|---|---|
| Recipe A - 400 g/2L | 400 g/2L | 0,0 | 0,919 |
| Recipe B - 240 g/2L | 240 g/2 L | 4,0 | 0,962 |
| Recipe C - 240 g/2L | 240 g/2 L | 3,2 | 0,947 |
| Recipe D - 240g/2L | 240 g/2 L | 2,3 | 0,936 |

All compositions showed floating of the composition on the water surface and dissolved well. The texture of comparative example A appeared to be too soft for proper handling. The textures of the examples B-D were like that of a dough and could be handled well. Comparative Example A, comprising a low starch level, did not show any lump formation. Increasing the level of starch to 52% (Example B), resulted in lump formation. Reducing the level of crystalline ingredients resulted in a reduction of lump formation. This was even the case although 240 g of product was added instead of 400g (comparative example A), to provide a comparable thickening result. This showed that unexpectedly, a reduction of crystalline ingredients resulted in a reduction of lump formation upon dilution in boiling water.

**Example 2**

The following example is prepared following the process used in example 1.

| Bechamel | Wt% |
|---|---|
| Fat and oil (mixture of sunflower oil, palm oil, palm stearin) | 37 |
| Wheat flour | 50 |
| Butter powder | 3.6 |
| Spices | 0.5 |
| Sugar | 1.8 |
| salt | 7.1 |

After dissolution in hot water, no lump formation was observed. During storage no exudation of fat was observed.

**Example 3**

The followina example is reared followina the process used in example 1.

| Hollandaise | Wt% |
|---|---|
| Fat/oil (mixture of sunflower oil, palm oil, palm stearin) | 32 |

(continued)

| Hollandaise | Wt% |
|---|---|
| Waxy rice starch | 10 |
| HF Starch, dried | 25.3 |
| Spray dried egg yolk | 11.6 |
| Flavour and color | 12.9 |
| salt | 8.2 |

After dissolution in hot water, no lump formation was observed. During storage no exudation of fat was observed.

**Example 4**

The following example is prepared following the process used in example 1.

| Butter roux paste | Wt% |
|---|---|
| Fat/oil (butter fat) | 30 |
| Wheat Flour | 70 |

The density of the product was 0.77 kg/L. The gas content 29.5%. The gas content was calculated as follows;

| Volume of the cup in use: | 10,71 | ml |
|---|---|---|
| Weight of empty cup: | 23,15 | g (m1) |
| Weight of cup + unaerated product: | 35,0 | g (m2) |
| weight of cup + aerated product (g) | 31,5 | g (m3) |

$$\text{Percentage of gas} = 100 - [(m_3-m_1)/\{(m_2-m_1)/100\}] = 100-(31{,}5-23{,}15)/(35-23{,}15)/100 = 29{,}5\ \%$$

After dissolution in hot water, no lump formation was observed. During storage no exudation of fat was observed.

**Example 5**

Compositions where prepared based on a curry roux from the prior art. The compositions were used according to the following protocol;

1. Butter fat (butter oil) was heated up to 80 °C in a pan.
2. Wheat flour was combined with the butter oil.
3. The temperature of the butter oil and wheat flour mix was increased to T=118 °C, while stirring occasionally for 10 min in the pan (sweating process).
4. Sweated wheat flour and butter oil were cooled down to about 60-80 °C.
5. Further dry ingredients (e.g. curry powder, salt, sugar etc.) were added in a mixing apparatus (Thermomix, Typ 31-1, from Vorwerk Elektrowerke GmbH & Co. KG, Wuppertal, Germany) and mixed.
6. After mixing the sweated wheat flour and butter oil where added to the dry mix in the Thermomix and mixed at highest level 10 (10000 rpm) for 5 min.
7. After mixing the mass was cooled down to T=25 °C in a cold water bath, which resulted in a solid fat content of 18 wt% based on fat content. The mix was aerated with air at 25 °C to reach a density < 1 kg/L, using a mixer of HobartTM.
8. The finished product was filled in a cylindrical plastic container with a diameter of about 10 cm.

The compositions were as follows:

| Recipe | Comp. Ex.E (wt%) | Comp. Ex F (wt%) | Ex. G (wt%) | Ex. H (wt%) | Ex. I (wt%) | Ex. J (wt%) |
|---|---|---|---|---|---|---|
| Butter oil | 30 | 30 | 30 | 30 | 30 | 30 |
| Wheat Flour | 26 | 52 | 52 | 26 | 26 | 52 |
| Curry powder | 26 | 0 | 9.4 | 35.4 | 30.7 | 4.7 |
| salt | 12 | 12 | 5.7 | 5.7 | 8.9 | 8.9 |
| sugar | 6 | 6 | 2.9 | 2.9 | 4.4 | 4.4 |
| | 100% | 100% | 100% | 100% | 100% | 100% |
| Total crystals | 18% | 18% | 8.6% | 8.6% | 13.3% | 13.3% |

Comparative example E is an aerated roux product comparable to that of the prior art. The product shows a relatively low level of starch (26% wheat flour). This is considered insufficient for proper binding. In comparative example F the level of flour is increased to 52 wt%, while maintaining the same level of crystals. In Example G-J the total level of crystalline ingredients (salt, sugar) is reduced, and compared at low (26%) and high (52%) amounts of wheat flour.

Lump formation

The formation of lump during use of the compositions was analysed according to the following protocol: Lumps formation test by mixing with a whisk (hand blended) - Single binding:

- Bring 2000 g of water to the boil
- Add the required amount of roux to the boiling water
- Stir with a whisk for 2 min (15 sec stirring, 15 not stirring, etc) in the boiling water
- After cooking, sieve the liquid using a sieve (800 $\mu$m)
- Weigh the remained lumps

| Example | Dosage | Lumps (g) |
|---|---|---|
| Comp. Ex. E | 400,0 | 0 |
| Comp. Ex. F | 240,0 | 6,4 |
| Ex. G | 240,0 | 4,9 |
| Ex. H | 400,0 | 0 |
| Ex. I | 400,0 | 0 |
| Ex. J | 240,0 | 5,75 |

It was observed that the Examples with a relatively low level of wheat flour (26%), Examples E, H, I, did not show formation of lumps. These samples where diluted in a dosage of 400 g per 2L, to provide the same binding effect as the Examples with a high level of wheat flour (52%).

At higher levels of wheat flour, lumping was observed at a high level of crystals (Comp. Ex. F) Reducing the level of crystals (Ex. J, Ex. G) resulted in a reduction of lump formation. The effect was analysed using the software JMP of SAS. The significance of the factors was described by the two-tailed t-test probability (p-level). The p-value represents the probability with a significance level of 0.05. Significance was found at a P-value of 0.0489.

A reduction of the amount of crystals from 18 wt% to 13.3 wt% resulted in 10.1% less lump formation, and a further reduction to an amount of crystals of 8.6 wt%, resulted in a reduction of 23.4% of lumping. This indicates that the compositions of the invention provide the advantage of reduced lump formation.

Texture

The texture of the samples E-J was analysed according to the protocol of Example 1. The temperature was 23.5 degrees C.

The results are indicated in the table below:

| Experiment | Texture [g] | SD |
| --- | --- | --- |
| Comp. Ex. E | 0.031 | 0.001 |
| Comp. Ex. F | 0.023 | 0.001 |
| Ex. G | 0.032 | 0.001 |
| Ex. H | 0.038 | 0.001 |
| Ex. I | 0.025 | 0.001 |
| Ex. j | 0.027 | 0.001 |

The Examples F, J and G showed that the texture of the composition increased with a reduction of the crystalline content, in a linear relation, and with a significance of 95%, P=0.0408, using a two-tailed t-test using the software JMP of SAS. Reduction of the total amount of crystals from 18 wt% (F) to 13.3 wt% (J), provided 17.4% stronger texture, and a further reduction to an amount of crystals of 8.6 wt% (G) resulted in a 39.1% increase in firmness. The higher firmness resulted in a product that is less sticky and thereby easier to dose during application by the consumer, because of the better spoonability of the product. It was observed that the samples E, I and H showed a similar trend.

## Claims

1. A food product comprising:

   • from 30 to 85 wt% starch,
   • from 15 to 50 wt% of fat,

   wherein the total amount of salt, monosodium glutamate and sugar taken together is less than 15 wt% of the weight of the food product,
   wherein the product is in the form of a paste and
   wherein the product has a density of between 0.6 and 1 kg/l at 20 °C and
   wherein the product comprises from 10 to 40 % of gas, compared to an identical product without added gas, wherein the percentage of gas is calculated according to the formula, wherein an aerated (gas-containing) product and non-aerated product are compared in a respective cup of a certain fixed volume:

$$\text{percentage of gas} = 100 - [(m3-m1)/\{(m2-m1)/100\}],$$

   wherein:

   $m_1$ = weight of the cup (g),
   $m_2$ = weight of the cup including the non-aerated product (g),
   $m_3$ = weight of the cup including the aerated product (g).

2. Product according to claim 1, wherein the fat has a melting point of between 20 and 70 °C.

3. Product according to anyone of the preceding claims, wherein the total amount of salt, monosodium glutamate and sugar taken together is less than 10 wt%, more preferably less than 5 wt% of the weight of the food product.

4. Product according to any one of the preceding claims, wherein the product comprises from 22-38% gas.

5. Product according to any one of the preceding claims, wherein the starch comprises a starch selected from the group consisting of wheat starch, rye starch, corns starch, rice starch, potato starch, tapioca starch and mixtures thereof, preferably wherein the starch comprises wheat starch.

6. Product according to any one of the preceding claims, wherein the starch comprises wheat starch in an amount of from 30 to 60 wt%, based on the weight of the total product.

7. Product according to any one of the preceding claims, wherein the product comprises gluten protein in an amount of from 4 to 12 wt% based on the weight of the total product.

8. Product according to any one of the preceding claims, wherein the fat comprises a fat selected from the group consisting of sun flower oil, palm oil, butter fat, palm kernel oil, corn oil, cottonseed cake oil, soybean oil, rape seed oil, coconut oil, derivatives thereof, fractions thereof, and mixtures thereof, preferably, wherein the fat comprises butter fat.

9. Product according to any one of the preceding claims, wherein the product is a roux or is a binding agent for preparing a viscous soup or for preparing a viscous sauce.

10. A method for preparing a food product according to any one of the preceding claims, the method comprising the steps of:

   a) Providing a mixture comprising:

   • fat and
   • starch,

   b) Adding gas to the mixture,
   c) Packaging the mixture resulting from step b),

   to result in a product according to any one of the claims 1 to 9.

11. A method according to claim 10, the method comprising the steps of:

   a) Providing a mixture comprising,

   • Fat and
   • Starch,
   • Heating the mixture resulting from step a),
   • Cooling the mixture resulting from the heating step until a level of fat solid fat is reached of between 8 and 40 %, based on the weight of the total amount of fat.

   b) Adding gas to the mixture resulting from the cooling step,
   c) Packaging the mixture to which gas is added,

   to result in a product according to any one of the claims 1 to 9.

12. Method according to claim 11, wherein the mixture resulting from step a) is heated to a temperature of between 100°C and 150 °C, preferably of from 110°C to 130°C.

13. Method according to any one of claims 10 to 12, wherein the step of addition of gas is carried out till a density of the mixture resulting from step c) is reached of from 0.6 to 1.0 kg/l at 20 °C.

14. Method according to any one of claims 10 to 13, wherein the addition of gas is carried out till a gas content is obtained in the mixture of from 10 to 70% overrun, preferably of from 30 to 60 % overrun.

15. Use of a product according to any one of claims 1 to 9 to increase the viscosity of an aqueous liquid or to prepare a viscous soup or sauce.

**Patentansprüche**

1. Lebensmittelprodukt, umfassend:

- von 30 bis 85 Gew.-% Stärke,
- von 15 bis 50 Gew.-% Fett,

wobei die gesamte Menge von Salz, Mononatriumglutamat und Zucker, zusammengenommen, weniger als 15 Gew.-% des Gewichts des Lebensmittelprodukts beträgt,
wobei das Produkt in Form einer Paste vorliegt und
wobei das Produkt bei 20 °C eine Dichte zwischen 0,6 und 1 kg/l aufweist und wobei das Produkt von 10 bis 40 % Gas umfasst, verglichen mit einem identischen Produkt ohne zugegebenes Gas, wobei der prozentuale Anteil des Gases entsprechend der Formel berechnet wird, worin ein begastes (Gas enthaltendes) Produkt und ein nicht-begastes Produkt in einem entsprechenden Becher eines bestimmten festgelegten Volumens verglichen werden:

$$\text{prozentualer Anteil vom Gas} = 100 - [(m3\text{-}m1)/\{(m2\text{-}m1)/100\}],$$

worin:

$m_1$ = Gewicht des Bechers (g),
m2 = Gewicht des Bechers, enthaltend das nicht-begaste Produkt (g),
m3 = Gewicht des Bechers, enthaltend das begaste Produkt (g).

2. Produkt nach Anspruch 1, wobei das Fett einen Schmelzpunkt zwischen 20 und 70 °C aufweist.

3. Produkt nach irgendeinem der vorhergehenden Ansprüche, wobei die gesamte Menge von Salz, Mononatriumglutamat und Zucker, zusammengenommen, weniger als 10 Gew.-%, bevorzugter weniger als 5 Gew.-% des Gewichts des Lebensmittelproduktes beträgt.

4. Produkt nach irgendeinem der vorhergehenden Ansprüche, wobei das Produkt von 22 - 38 % Gas umfasst.

5. Produkt nach irgendeinem der vorhergehenden Ansprüche, wobei die Stärke eine Stärke umfasst, die aus der Gruppe ausgewählt ist, bestehend aus Weizenstärke, Roggenstärke, Maisstärke, Reisstärke, Kartoffelstärke, Tapiokastärke und Mischungen davon, wobei die Stärke vorzugsweise Weizenstärke umfasst.

6. Produkt nach irgendeinem der vorhergehenden Ansprüche, wobei die Stärke Weizenstärke in einer Menge von 30 bis 60 Gew.-%, bezogen auf das Gewicht des gesamten Produktes, umfasst.

7. Produkt nach irgendeinem der vorhergehenden Ansprüche, wobei das Produkt Glutenprotein in einer Menge von 4 bis 12 Gew.-%, bezogen auf das Gewicht des gesamten Produkts, umfasst.

8. Produkt nach irgendeinem der vorhergehenden Ansprüche, wobei das Fett ein Fett umfasst, das aus der Gruppe ausgewählt ist, bestehend aus Sonnenblumenöl, Palmöl, Butterfett, Palmkernöl, Maisöl, Baumwollsamenkuchenöl, Sojaöl, Rapssamenöl, Kokosnussöl, Derivaten davon, Fraktionen davon und Mischungen davon, wobei das Fett vorzugsweise Butterfett umfasst.

9. Produkt nach irgendeinem der vorhergehenden Ansprüche, wobei das Produkt eine Mehlschwitze ist oder ein Bindemittel zur Herstellung einer viskosen Suppe oder zur Herstellung einer viskosen Soße ist.

10. Verfahren zur Herstellung eines Lebensmittelprodukts nach irgendeinem der vorhergehenden Ansprüche, wobei das Verfahren die Schritte umfasst:

    a) Bereitstellen einer Mischung, umfassend:

    - Fett und
    - Stärke,

    b) Zugeben von Gas zu der Mischung,
    c) Verpacken der Mischung, die aus Schritt b) resultiert,

um zu einem Produkt nach irgendeinem der Ansprüche 1 bis 9 zu führen.

**11.** Verfahren nach Anspruch 10, wobei das Verfahren die Schritte umfasst:

a) Bereitstellen einer Mischung, umfassend

- Fett und
- Stärke,
- Erhitzen der Mischung, die aus Schritt a) resultiert,
- Kühlen der Mischung, die aus dem Erhitzungsschritt resultiert, bis ein Anteil des Fetts in Form festen Fetts zwischen 8 und 40 % erreicht wird, bezogen auf das Gewicht der gesamten Menge des Fetts,

b) Zugeben von Gas zu der Mischung, die aus dem Kühlschritt resultiert,
c) Verpacken der Mischung, zu der Gas gegeben ist,

um zu einem Produkt nach irgendeinem der Ansprüche 1 bis 9 zu führen.

**12.** Verfahren nach Anspruch 11, wobei die Mischung, die aus Schritt a) resultiert, auf eine Temperatur zwischen 100 °C und 150 °C, vorzugsweise von 110 °C bis 130 °C, erhitzt wird.

**13.** Verfahren nach irgendeinem der Ansprüche 10 bis 12, wobei der Schritt des Zugebens von Gas durchgeführt wird, bis bei 20 °C eine Dichte der Mischung, die aus Schritt c) resultiert, von 0,6 bis 1,0 kg/l erreicht ist.

**14.** Verfahren nach irgendeinem der Ansprüche 10 bis 13, wobei das Zugeben von Gas durchgeführt wird, bis in der Mischung ein Gasgehalt von 10 bis 70 % Überlauf, vorzugsweise von 30 bis 60 % Überlauf, erreicht ist.

**15.** Verwendung eines Produkts nach irgendeinem der Ansprüche 1 bis 9, um die Viskosität einer wässrigen Flüssigkeit anzuheben oder um eine viskose Suppe oder Soße herzustellen.

**Revendications**

**1.** Produit alimentaire comprenant :

de 30 à 85 % en masse d'amidon,
de 15 à 50 % en masse de graisse,
dans lequel la quantité totale de sel, glutamate de monosodium et sucre pris ensemble est inférieure à 15 % en masse de la masse du produit alimentaire,
dans lequel le produit est dans la forme d'une pâte et
dans lequel le produit présente une densité de 0,6 à 1 kg/l à 20°C et
dans lequel le produit comprend de 10 à 40 % de gaz, comparé à un produit identique sans gaz ajouté, dans lequel le pourcentage de gaz est calculé selon la formule, dans lequel un produit aéré (contenant du gaz) et un produit non-aéré sont comparés dans un bol respectif d'un certain volume fixé :

$$\text{pourcentage de gaz} = 100 - [(m3\text{-}m1)/\{(m2\text{-}m1)/100\}],$$

dans lequel :

$m_1$ = masse du bol (g),
$m_2$ = masse du bol incluant le produit non-aéré (g),
$m_3$ = masse du bloc incluant le produit aéré (g).

**2.** Produit selon la revendication 1, dans lequel la graisse présente un point de fusion de 20 à 70°C.

**3.** Produit selon l'une quelconque des revendications précédentes, dans lequel la quantité totale de sel, glutamate de monosodium et sucre pris ensemble est inférieure à 10% en masse, encore mieux inférieure à 5 % en masse de la masse du produit alimentaire.

**4.** Produit selon l'une quelconque des revendications précédentes, dans lequel le produit comprend de 22-38 % de gaz.

**5.** Produit selon l'une quelconque des revendications précédentes, dans lequel l'amidon comprend un amidon choisi dans le groupe consistant en amidon de blé, amidon de seigle, amidon de maïs, amidon de riz, amidon de pomme de terre, amidon de tapioca et mélanges de ceux-ci, de préférence dans lequel l'amidon comprend de l'amidon de blé.

**6.** Produit selon l'une quelconque des revendications précédentes, dans lequel l'amidon comprend de l'amidon de blé dans une quantité de 30 à 60% en masse, rapporté à la masse du produit total.

**7.** Produit selon l'une quelconque des revendications précédentes, dans lequel le produit comprend une protéine de gluten dans une quantité de 4 à 12 % en masse rapporté à la masse du produit total.

**8.** Produit selon l'une quelconque des revendications précédentes, dans lequel la graisse comprend une graisse choisie dans le groupe consistant en huile de fleur de tournesol, huile de palme, beurre, huile de palmiste, huile de maïs, huile de tourteau de coton, huile de soja, huile de colza, huile de noix de coco, dérivés de celles-ci, fractions de celles-ci, et mélanges de celles-ci, de préférence, dans lequel la graisse comprend du beurre.

**9.** Produit selon l'une quelconque des revendications précédentes, dans lequel le produit est un roux ou est un agent liant pour préparer une soupe visqueuse ou pour préparer une sauce visqueuse.

**10.** Procédé de préparation d'un produit alimentaire selon l'une quelconque des revendications précédentes, le procédé comprenant les étapes de :

a) fourniture d'un mélange comprenant :

de la graisse et
de l'amidon,

b) addition de gaz au mélange,
c) emballage du mélange résultant de l'étape b),

pour résulter en un produit selon l'une quelconque des revendications 1 à 9.

**11.** Procédé selon la revendication 10, le procédé comprenant les étapes de :

a) fourniture d'un mélange comprenant,

de la graisse et
de l'amidon,
chauffage du mélange résultant de l'étape a),
refroidissement du mélange résultant de l'étape de chauffage jusqu'à ce qu'une teneur en graisse solide ait atteint de 8 à 40%, sur la base de la masse de la quantité totale de graisse,

b) addition de gaz au mélange résultant de l'étape de refroidissement,
c) emballage du mélange auquel du gaz est ajouté,

pour résulter en un produit selon l'une quelconque des revendications 1 à 9.

**12.** Procédé selon la revendication 11, dans lequel le mélange résultant de l'étape a) est chauffé à une température de 100°C à 150°C, de préférence de 110°C à 130°C.

**13.** Procédé selon l'une quelconque des revendications 10 à 12, dans lequel l'étape d'addition de gaz est réalisée jusqu'à ce qu'une densité du mélange résultant de l'étape c) atteigne de 0,6 à 1,0 kg/l à 20°C.

**14.** Procédé selon l'une quelconque des revendications 10 à 13, dans lequel l'addition de gaz est réalisée jusqu'à ce qu'une teneur en gaz soit obtenue dans le mélange de 10 à 70 % de dépassement, de préférence de 30 à 60 % de dépassement.

**15.** Utilisation d'un produit selon l'une quelconque des revendications 1 à 9 pour augmenter la viscosité d'un liquide aqueux ou pour préparer une soupe ou sauce visqueuse.

**EP 3 062 635 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001292744 A

- JP 2004275089 A